Europäisches Patentamt

European Patent Office

Office européen des brevets

(11) Publication number: **0 322 183 B1**

(12) # EUROPEAN PATENT SPECIFICATION

(45) Date of publication of patent specification: **19.04.95**

(51) Int. Cl.⁶: **C23F 11/08**, C09K 3/18, C23F 11/18, C23F 11/10

(21) Application number: **88312040.4**

(22) Date of filing: **19.12.88**

(54) **Method of inhibiting corrosion.**

(30) Priority: **17.12.87 US 134089**
**29.08.88 US 250002**
**12.12.88 US 282641**

(43) Date of publication of application:
**28.06.89 Bulletin 89/26**

(45) Publication of the grant of the patent:
**19.04.95 Bulletin 95/16**

(84) Designated Contracting States:
**AT BE CH DE ES FR GB IT LI LU NL SE**

(56) References cited:
**EP-A- 0 027 870       EP-A- 0 096 619**
**EP-A- 0 288 812       DE-A- 3 142 059**
**FR-A- 1 570 819       US-A- 4 606 835**
**US-A- 4 668 416**

**CHEMICAL ABSTRACTS, vol. 102, no. 22, June 3, 1985, page 308, abstract 189922r, Columbus, Ohio, US & JP-A-60 05 056 (CENTRAL GLASS CO. LTD.) 11-01-1985**

(72) Inventor: **Johnston, Allan**
**909 North California Ave**
**Palo Alto**
**California 94303 (US)**
Inventor: **Mason, Dean A**
**100 Rougemont St**
**Kirkland**
**Ouebec H9J 2H5 (CA)**
Inventor: **Lawless, Darren F**
**5732 Cadillac St**
**Montreal**
**Ouebec H2M 2L7 (CA)**
Inventor: **Peel, Terence E**
**PO Box 529**
**Hudson Heights**
**Ouebec JOP 1JO (CA)**

(74) Representative: **Gore, Peter Manson et al**
**W.P. THOMPSON & CO.**
**Coopers Building**
**Church Street**
**Liverpool L1 3AB (GB)**

(73) Proprietor: **DOMTAR INC.**
**P.O. Box 7210**
**Montreal**
**Ouebec, H3C 3M1 (CA)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services
(3.10/3.09/3.3.3)

## Description

The present invention relates to methods of inhibiting corrosion of rebars in reinforced concrete, particularly caused by chloride ions and the like, such as, for example, corrosion caused by corrosive deicers, acid rains and the like. It also relates to inhibiting such corrosion when also using a deicer.

The expression "corrosion caused by chloride ions and the like" used throughout the present specification means corrosion caused by, for instance, NaCl, $CaCl_2$, other corrosive deicers or any other products causing or susceptible of causing similar corrosion. It also means that systems containing sodium fluorophosphate must not be used to inhibit strong acidic corrosion, such as, for example, battery corrosion, since HF may be produced and is, of course, corrosive.

The present invention also relates to a plethora of carriers such as, for example, gaseous, liquid and solid carriers or diluents, including for sake of example, but not limited thereto, deicers, sand, solvents, diluents, coatings, paints, emulsions, suspensions, air jet applications, and the like for the corrosion inhibiting system.

The corrosion inhibiting system is one containing at least sodium fluorophosphate ($Na_2PO_3F$ which is also known under the name sodium monofluorophosphate).

The invention furthermore relates to the method of making the corrosion inhibiting systems, to the methods of use and to the products resulting therefrom containing at least residual amounts of the corrosion inhibiting systems.

The invention relates in particular, to corrosion inhibiting systems for reinforced concrete.

Sodium chloride is widely used as a deicer. Many means have been proposed to overcome the corrosion problems associated to its use. For instance, the corrosion of rebars in concrete has been reduced by prior coating of the rebars with epoxy before concrete addition, or with cathodic protection.

The environment normally provided to reinforcing steel by the surrounding concrete is almost ideally suited for preventing corrosion of the steel. High quality concrete, properly placed, consolidated and cured provides a highly alkaline, low permeability covering for the steel which protects (passivates) against corrosion and minimizes penetration of corrosion-inducing factors, namely oxygen, water and chloride. However, the entrance of moisture, electrolytes and oxygen by diffusion or through hairline cracks in the concrete can destroy the passive environment, establish galvanic corrosion cells and eventually destroy the concrete through the expansive forces created by the corroding steel. Chloride salts seem to be the most vigorous in providing this kind of attack. Thus, concrete structures with lower quality concrete or insufficient cover over rebars, and those exposed to severe conditions, such as, for example, bridge decks subject to deicing salt application or marine environments, are particularly susceptible to rapid deterioration. The magnitude of this problem and the economic impact of repair and rebuilding of highway structures has led to extensive research into the electro-chemical behaviour of steel in concrete and possible solutions over the past 15 years. Past and present research efforts have focused on the importance of factors such as, for example, depth of cover, water/cement ratio, coated rebars, inhibitor admixtures for cement, low permeability concretes, etc. in new construction, and monitoring and repair techniques for existing structures, e.g. cathodic protection, and membrane overlays.

The low corrosion rate of steel in uncontaminated concrete is due to the formation, in the presence of sufficient oxygen, of a stable, passive layer of gamma-$Fe_2O_3$ on the steel surface in the high pH (12-13) environment. There are two general mechanisms by which this passivating effect may be destroyed:-(1) Reduction of the alkalinity by leaching of alkaline substances and/or partial reaction with $CO_2$, and (2) physical and electrochemical action involving chloride or other aggressive anions. Once the passitivity of the steel has been destroyed, the corrosion rate increases dramatically with the formation of micro and macrocorrosion cells. Oxidation of iron to ferrous ions and formation of oxides occurs at the anode (equation 1) while reduction of oxygen occurs at the cathode (equation 2).

(1)     $Fe \rightarrow Fe^{2+} + 2e + O_2 \rightarrow Fe_3O_4$

(2)     $1/2\ O_2 + H_2O + 2e \rightarrow 2OH^-$

The anodic and cathodic areas of corroding steel may be widely separated. They depend upon differences in chloride or other anion, and oxygen concentrations and are affected by the pH near the steel/concrete interface.

In Chemical Abstracts Vol 102, 1985 Abstract 189922r there is disclosed the preparation of a gypsum composition so that the gypsum composition contains 0.1 to 5 weight per cent of a fluorophosphate.

In EP-A- 0 096 619 there is disclosed the protection of metallic surfaces in aqueous medium employing generally sparingly water-soluble fluorophosphates.

In EP-A- 0 288 812 there is disclosed the replacement of sodium sulphate in detergents by fluorophosphates to eliminate or reduce the film produced on glass by dishwashing detergents, the film being referred to as "corrosion".

According to the present invention there is provided a method of inhibiting corrosion of rebars in reinforced concrete which comprises laying on the surface of the reinforced concrete a corrosion inhibitor system containing at least sodium monofluorophosphate, and wherein in contact with water the sodium monofluorophosphate inhibits the corrosion of the rebars.

Generally at least one deicer substance is also present in the composition. Usually there is at least 50% by weight of the deicer substance, preferably at least 70% by weight, more preferably at least 85% by weight, and most preferably at least 90%, or even at least 95% by weight, particularly when the deicer is sodium chloride.

Usually deicer substance or substances is or are selected from sodium chloride, calcium chloride, magnesium chloride and potassium chloride, but preferably comprises sodium chloride.

Generally there is at least 0.25% by weight of the corrosion inhibiting system. The amount is of course dependent to some extent on the amount of deicer substance (any any other materials) which may be present. Preferably the amount is less than 10% and more preferably 2 to 5% by weight.

As referred to above, the corrosion inhibiting system comprises sodium fluorophosphate. A particularly useful deicer composition is one having, as corrosion inhibiting system, $3 \pm 0.5\%$ by weight of a sodium fluorophosphate system.

It is also possible to use in the corrosion inhibiting system, a water soluble salt of a phosphonic acid derivative particularly one selected from a salt of triethylene tetramine hexakis methylene phosphonic acid and ethylhexyliminobis methylene phosphonic acid.

The corrosion inhibiting composition may also comprise at least one amide of a fatty acid, particularly cocoamide. An especial useful corrosion inhibiting composition is one comprising sodium fluorophosphate, cocoamide and a phosphonic acid derivative.

The corrosion inhibiting composition may also comprise sodium silicate, usually the weight ratio of (a) and/or (b) being 1 to 10 : 1 to 2.5; and preferably substantially 1:1.

The deicer composition is usually dissolved in a suitable solvent, often in an aqueous medium and particularly so as to form a substantially saturated solution.

There may also be present at least one soil conditioner in the deicer composition.

According to an embodiment of the present invention there is provided a method to deice an outdoor surface which comprises laying over the surface a deicer composition used in the present invention. Preferably, the deicer substance is mixed with the corrosion inhibiting system and laid over the concrete surface, the mixing and laying being conducted at substantially the same time. The corrosion inhibiting system may impinge upon the deicer substance before being laid over the concrete surface. The deicer composition or the corrosion inhibiting system may be laid as an aqueous solution in concentrate form.

Particularly preferred deicer compositions are (a) one containing at least 85% by weight of the deicer substance and at least 0.25% by weight of a corrosion inhibiting composition containing sodium fluorophosphate; (b) one containing sodium fluorophosphate and sodium silicate in a weight ratio of substantially 1:1; and (c) one in which the deicer substance is a corrosive deicer having at least 95% by weight of sodium chloride.

The present invention can provide reinforced concrete containing rebars, the concrete containing at least residual amounts of the deicer composition used in the present invention.

Particularly preferred deicer compositions are:-

(a) one in which the corrosion inhibiting composition is sodium monofluorophosphate;

(b) one which comprises at least 70% by weight of the deicer substance and at least 0.25% by weight of a corrosion inhibiting system containing sodium fluorophosphate;

(c) one in which the corrosion inhibiting composition comprises sodium fluorophosphate and sodium silicate;

(d) one which comprises sodium fluorophosphate and sodium chloride; and

(e) one in which the corrosion inhibiting composition also comprises a water soluble salt of at least one phosphonic acid derivative as defined hereinabove.

The present invention can provide an outdoor surface containing at least residual amounts of a deicer composition used in the present invention.

According to another embodiment of the present invention there is used a corrosion inhibiter system comprising at least one member selected from

(a) sodium fluorophosphate,

(b) a water soluble salt of at least one phosphonic acid derivative having the general formula

$$R_n R' N (CH_2 PO_3 H_2)_{2-n}$$

wherein R and R' are each independently selected from alkyl, aminoalkyl and hydroxyalkyl, and n is 0 or 1. The system is preferably in a suitable carrier. It may be dissolved in aqueous medium, preferably at a concentration substantially close to saturation.

The corrosion inhibitor system may, for example, be in a member selected from (1) coatings and paints, particularly paint, and (2) emulsions and suspensions. The carrier may be non-aqueous. It may even be sand.

The corrosion inhibitor system may be applied, for example, to an outdoor surface.

In this embodiment, it is sometimes preferred that the at least one member comprises sodium fluorophosphate together with sodium silicate. In such a mixture, the weight ratio of sodium fluorophosphate to sodium silicate is preferably 1 to 10 : 1 to 2.5, more preferably substantially 1:1.

The outdoor surface may be, for example, sprayed or painted with the corrosion inhibitor system.

The water allows the displacement of the corrosion inhibiting system such as sodium fluorophosphate onto the rebars.

Deicers are well known. By deicers it is meant in general, any product able to lower the freezing point of water and which possesses the other suitable characteristics necessary to not cause adverse substantial effects to the surrounding or its intended use. For instance, it must not be slippery if the intended use is for roads. This includes glycols (e.g. ethylene glycols), calcium magnesium acetate, methanol, calcium chloride, magnesium chloride, urea, sodium formate and in general other deicers that are generally available. It also includes corrosive deicers, and the corrosion inhibitors of the present invention are particularly beneficial with such corrosive deicers.

The invention is also directed to a corrosion inhibitor system in a plethora of suitable carriers. As examples, the carrier may be a suitable vapour, liquid or solid phase. It includes, for sake of example but is not limited to, deicers, paints, coatings, diluents, emulsions, suspensions, solvents and air jet applications.

Some preferred embodiments comprise aqueous solutions of sodium fluorophosphate, particularly sodium fluorophosphate and sodium silicate, more preferably substantially close to saturation, i.e. as close to saturation as possible to then be diluted upon use. Other preferred embodiments include coatings and paints comprising sodium fluorophosphate.

The outdoor surfaces may be sprayed dry or wet, coated, painted, dipped in a container containing the corrosive inhibitor system.

By corrosive deicer as opposed to deicers, is meant a deicer susceptible of causing corrosion comprising salts such as, for example, sodium chloride, calcium chloride, magnesium chloride, potassium chloride, sodium formate, other corrosive deicers and other products having ions acting as the chloride ions.

By a corrosion inhibiting system containing fluorophosphate or alternatively a system containing fluorophosphate is meant fluorophosphate alone and in combination with other ingredients, such as for instance, sodium silicate with or without other additives if desired. For instance, soil conditioners such as $CaSO_4$, urea, other mineral containing material, nitrogen substances and the like, in amounts that do not substantially affect the deicing characteristics of the deicer as discussed hereinbelow.

The invention is also directed to products containing at least residual amounts of the corrosion inhibiting systems, this means either in the form of corrosion inhibiting systems or as a residual amount resulting from the action of the corrosion inhibiting systems on the products or on a component of the products, or from ageing, washing, rains, etc. These products have generally outdoor surfaces exposed to air, chloride ions and the like.

Preferably the invention is directed to deicers having reduced corrosion characteristics comprising common salt (NaCl), with at least 0.25% and preferably 2 to 5% by weight of a system containing sodium fluorophosphate, with or without sodium silicate. The weight ratio of sodium fluorophosphate to sodium silicate may be for instance 1 to 10 : 1 to 2.5, but preferably about 1:1. These deicers are the most preferred, since the deicing property of the common salt is substantially maintained, while their corrosive characteristics are inhibited particularly with respect to the rebars when used in association with reinforced concrete.

There are a plethora of ways that can be used for the application of deicers. For instance, deicers could be used with sand. The deicer having reduced corrosion characteristics may be dry mixed or wet mixed, whether solid mixed or mixed in situ on locations where needed. For instance, it may be made by dry mixing sodium chloride with the system containing fluorophosphate. The system containing fluorophosphate may also for specific end uses be dissolved, suspended or emulsified in a suitable solvent or diluent, for instance water, glycols, sand, preferably with the least possible dilution, with enough water to obtain a viscosity whereby the system containing sodium fluorophosphate will be easily sprayable over the sodium chloride or sprayed against the sodium chloride whether at a plant or in a salt and/or sand dispensing vehicle, for instance such that the system impinges upon the sodium chloride and/or the sand before being laid over a surface, such as, for example, a concrete surface. The system may also be sprayed along with the sodium chloride, or the system may be distributed into the sodium chloride by any other means. The sodium chloride may be, for instance, brought by endless conveyors, such as belt conveyor or other means. Spraying of the system is done to obtain the desired levels, for instance 0.25 to 10% by weight, or higher if desired, and preferably 2 to 5% by weight of the system containing sodium fluorophosphate in the new deicer having reduced corrosion characteristics.

This deicer such as salt and the corrosion inhibitor system, having reduced corrosion characteristics, has nonetheless, the characteristics which are required of a good deicer substantially unaltered, such as, for example, friction, freezing point, rate of ice penetration, and ice melting rate.

The deicer having corrosion characteristics may contain, instead of sodium chloride, other deicers as stated above and what has been said of sodium chloride may generally be said of these other corrosive deicers.

The corrosive deicers may not only contain fluorophosphate with or without sodium silicate, although less preferred the corrosive deicers may be used with or without amides of a fatty acid, for instance, such as those having 8 to 24 carbon atoms, (e.g. cocoamide, at an acceptable toxicity level). Also, though less preferred, salts, or derivatives of phosphonic acid as described above may be used. Typical examples of these derivatives of phosphonic acids include sodium salt or other compatible soluble salts of triethylenetetraminehexakis (methylene phosphonic acid), and sodium salt of ethylhexyliminobis (methylene phosphonic acid), or combination thereof.

A way of preparing these derivatives of phosphonic acid comprises reacting an amine, with formaldehyde and phosphonic acid. The deicer may be pelletized if desired.

The corrosion inhibitor systems described above may be used with or without deicers to inhibit corrosion. The corrosion inhibitor systems may also be present in a suitable carrier whether a gas, liquid or solid, such as, for example, an aqueous or other medium, forming solution with or without deicers, for instance, aqueous saturated solutions or as a coating, an emulsion suspension or a paint for some applications. The paint, the emulsion, the suspension or the coating may be used if desired for coating metals such as, for example, rebars, car structures, bridge structures, utility lines, culvers or other metallic outdoor surfaces. Air may also be used to disperse the corrosion inhibiting system as well as other suitable gases.

The following Examples will now serve to illustrate particular embodiments of the invention.

EXAMPLES 1 to 4

The test used was ASTM-G-31-72 as reapproved in 1985 on the corrosive deicers and with the systems described on Table 1. The corrosion rate resulting in weight loss is being expressed in mm per year (also in mils per year - mpy). As can be easily seen, systems containing fluorophosphate and silicate have a significant positive effect in reducing corrosion as seen from the Examples.

## TABLE 1

### CORROSION RATE (TOTAL IMMERSION) OF STEEL (C1010 MILD STEEL)

### COUPONS IN 3% SALT SOLUTIONS

| Example No. | % Corrosive Deicer | Sodium fluorophosphate system: weight % | Corrosion rate mm/y | (mpy) |
|---|---|---|---|---|
| 1 | 89.5 NaCl | 3 sodium fluorophosphate<br>5 sodium silicate<br>2.5 lignosulfonate | 0.0213 | 0.84 |
| 2 | 87 NaCl<br>3.5 MgCl$_2$ | 3.5 sodium fluorophosphate<br>3.5 sodium silicate<br>2.5 lignosulfonate | 0.0142 | 0.56 |
| 3 | 75 NaCl<br>16 CaSO$_4$<br>3 CaCl$_2$ | 3 sodium fluorophosphate<br>3 sodium silicate | 0.0206 | 0.81 |
| 4 | 77.5 NaCl<br>15 CaSO$_4$ | 2.5 sodium fluorophosphate<br>2.5 sodium silicate<br>1.25 cocoamide<br>1.25 a phosphonic acid derivative, namely: triethylene tetramine, hexakis (methylene phosphonic acid) | 0.0338 | 1.33 |
| Sample A | 100 NaCl | 0 | 0.0589 | 2.32 |

EXAMPLE 5

The following illustrates the effect of pH on corrosion rate by sodium chloride alone, or with the following:

A: which is $Na_2PO_3F$, and

B: which is $Na_2PO_3F : Na_2SiO_3$ : Na lignosulfonate: 1:1:1 using the method as described for Examples 1 to 4.

| Inhibiting system % | pH 6 | | pH 8 mm/y py) | pH 10 (m mm/y py) | pH 12 (m mm/y (mpy) |
|---|---|---|---|---|---|
| | 264 hrs mm/y (mpy) | 693 hrs mm/y (mpy) | | | |
| 0 | (2.36) | (1.96) | 0.0498 (1.84) | 0.0389 (1.53) | 0.0523 (2.06) |
| 6% A | ( - ) | (0.53) | 0.0124 (0.49) | 0.0244 (0.96) | 0.0320 (1.26) |
| 4% A | (1.51) | (0.41) | 0.0198 (0.78) | 0.0310 (1.22) | 0.0287 (1.13) |
| 2% A | (1.95) | (0.68) | 0.0226 (0.89) | 0.0325 (1.28) | 0.0264 (1.04) |
| 6% B | ( - ) | (0.49) | 0.0127 (0.50) | 0.0086 (0.34) | 0.0259 (1.02) |
| 4% B | (0.68) | (0.34) | 0.0132 (0.52) | 0.0135 (0.53) | 0.0302 (1.19) |
| 2% B | (1.49) | (1.14) | 0.0226 (0.89) | 0.0208 (0.82) | 0.0246 (0.97) |

EXAMPLES 6-7

The following also demonstrates the reduced corrosion characteristics of a system comprising sodium chloride using the following procedure:

Rebar/concrete specimens were fabricated from 5.08 cm (1/2") rebar stock, and concrete with a mix design of 1:1:5 (Portland cement:water:sand). Sodium chloride was added to the mix water to yield a concrete chloride level of 11.87 kg/m$^3$ (20 lb/yd$^3$)Cl$^-$. Concrete cover was 5 mm, and exposed rebar area 14 cm$^2$. Corrosion rates were measured using AC impedance measurement method; in sequential AC impedance measurements, a sine wave of fixed amplitude, usually in the order of 10 mv, is applied to the embedded steel at decreasing frequencies and both the phase shift and modulus of impedance of the steel are monitored as a function of frequency. This teaching is described in F. Mansfeld, "Recording and Analysis of AC Impedance Data for Corrosion Studies - I", Corrosion - Nace, vol. 36 No. 5, pp. 301-307, May 1981, and vol. 38 No. 11, pp. 570-580, November 1982, and K. Hladky, L. Callow, J. Dawson, "Corrosion Rates from Impedance Measurements: An Introduction", Br. Corro J., vol. 15, No. 1, pp. 20-25, 1980.

TABLE 2

| 3 % SALT SOLUTION | | | | |
|---|---|---|---|---|
| Example No. | % of components in deicer | Days of exposure | Corrosion rate | |
| | | | mm/y | (mpy) |
| 6 | 98 NaCl 2 Na$_2$PO$_3$F | 85 | 0.0155 | 0.61 |
| 7 | 98 NaCl 2 phosphonic acid derivative as in Example 4 | 75 | 0.0414 | 1.63 |
| Sample B | 100 NaCl | 85 | 0.0605 | 2.38 |

EXAMPLES 8-19

In the following examples, corrosion current in MACROCELL corrosion test using reinforced concrete slabs was monitored as follows:

Two mats of rebars were cast in concrete using average quality air-entrained concrete. Various levels of sodium chloride were admixed into several of the top mat layers in order to accelerate corrosion and simulate the environment present in old bridge decks. A dam was placed on top of each slab and 6% solutions of deicer product ponded to a depth of 1.69 cm (2/3"). Solutions were replenished every 2 weeks.

The top and bottom sets of rebars were electrically connected and a momentary off/on switch in series with a 1.0 ohm resistor installed between the two mats.

The corrosion current flowing between the top and bottom mats was measured as the voltage drop across the resistor when the switch is 'on' (normal position). The driving force (potential difference) between the top and bottom mats was measured as the "instant-off" potential between the 2 mats (switch momentarily depressed (off); voltage reading taken within 2 seconds). Corrosion potentials of the top mats were measured versus saturated calomel electrodes with the switch in the normal 'on' position.

In said table 3, [Cl⁻] means kg of chloride per cubic metre (lb of chloride per cubic yard) the same batch being used for Examples 8, 12 and 16, as with Sample W, and so on.

ANALYSIS

An analysis of corrosion products on rebars of Sample C and Example 8 has been made.

The corrosion product layer of Sample C is composed mainly of iron oxides/hydroxides with small amounts of sodium and chlorine (from the solution) and silicon (silica from the aggregate mixture) present. The concrete side of the interface indicates that the calcium is present as both oxides/hydroxides and carbonates.

The corrosion product layer of Example 8 is more complex. The layer is quite thick, and has a higher calcium content than the non-inhibited surfaces. The calcium is present as calcium oxide/hydroxide with no indication of carbonate species present. There is also indications of appreciable amounts of chromium, nitrogen, and aluminium present in the film. Trace amounts of phosphorus were also detected.

As a tentative explanation only, it would appear that the action of the inhibitor may be an alteration of the local environment due to a reaction or prevention of a reaction with the concrete constituents. The major difference between the inhibited (Example 8) and non-inhibited (Sample C) is the amount and nature of the calcium present in the corrosion product films. Carbonation of the concrete layer, along with presence of chlorides, is an essential precursor for corrosion of the steel rebar. It was found that the inhibitor of the present invention affects this carbonation reaction and thus the mechanism for corrosion inhibition amounts to alteration of the local environment allowing the maintenance of a stable passive film rather than the incorporation of the inhibitor compound into the film to form a more protective layer on the surface.

TABLE 3

| Example | [Cl⁻] of top concrete kg/m³ | [Cl⁻] of top concrete lb/yd³ | Components of the Deicer | % by weight of components | $i_{corr}$ (205 days) (micro amps) |
|---|---|---|---|---|---|
| 8 | 0 | 0 | NaCl+A | 96:4 | 5 |
| 9 | 2.97 | 5 | NaCl+A | 96:4 | 83 |
| 10 | 5.93 | 10 | NaCl+A | 96:4 | 11 |
| 11 | 8.90 | 15 | NaCl+A | 96:4 | 23 |
| 12 | 0 | 0 | NaCl+A+B+C | 96:1.33:1.33:1.33 | 13 |
| 13 | 2.97 | 5 | NaCl+A+B+C | 96:1.33:1.33:1.33 | 144 |
| 14 | 5.93 | 10 | NaCl+A+B+C | 96:1.33:1.33:1.33 | 40 |
| 15 | 8.90 | 15 | NaCl+A+B+C | 96:1.33:1.33:1.33 | 242 |
| 16 | 0 | 0 | NaCl+A+D+E | 96:1.33:1.33:1.33 | 22 |
| 17 | 2.97 | 5 | NaCl+A+D+E | 96:1.33:1.33:1.33 | 190 |
| 18 | 5.93 | 10 | NaCl+A+D+E | 96:1.33:1.33:1.33 | 3 |
| 19 | 8.90 | 15 | NaCl+A+D+E | 96:1.33:1.33:1.33 | 134 |
| Sample | | | | | |
| C | 0 | 0 | NaCl | 100 | 205 |
| D | 2.97 | 5 | NaCl | 100 | 205 |
| E | 5.93 | 10 | NaCl | 100 | 131 |
| F | 8.90 | 15 | NaCl | 100 | 293 |

In the components of the deicer as referred to in the column above.

A = sodium fluorophosphate
B = cocoamide
C = phosphonic acid derivative – sodium of salt of triethylenetetraminehexakis (methylene phosphonic acid)
D = sodium silicate
E = sodium lignosulfonate

EXAMPLE 20

The following will serve to illustrate the reduced corrosion characteristics of a 4% deicer solution. The % inhibition is calculated as a percentage of reduction of corrosion rate over the corrosion rate of the same deicer solution without the $Na_2PO_3F$ system.

| Deicer | % $Na_2PO_3F$ System | Average Corrosion Rate | | % Inhibition |
|---|---|---|---|---|
| | | mm/y | (mpy) | |
| 100 $CaCl_2$ | 0 | 0.0699 | 2.75 | |
| 94 $CaCl_2$ | 6 $Na_2PO_3F$ | 0.0307 | 1.21 | 56 |
| 94 $CaCl_2$ | 6* | 0.0302 | 1.19 | 56.7 |
| 100 $MgCl_2$ | 0 | 0.0594 | 2.34 | |
| 94 $MgCl_2$ | 6 $Na_2PO_3F$ | 0.0343 | 1.35 | 42.3 |
| 94 $MgCl_2$ | 6* | 0.0351 | 1.38 | 41 |

*$Na_2PO_3F$ + $Na_2SiO_3$ + sodium lignosulfonate in a weight ratio of 1:1:1.

## EXAMPLE 21

The following will serve to illustrate the effect of the concentration of $Na_2PO_3F$ system over time using a 4% sodium chloride deicer solution defined as follows:

| Deicer | % $Na_2PO_3F$ System | Corrosion | | Rate (mpy) | |
|---|---|---|---|---|---|
| | | 264 hrs | | 639 hrs | |
| | | mm/y | mpy | mm/y | mpy |
| 100 NaCl | | 0.0599 | 2.36 | 0.0498 | 1.96 |
| 96 NaCl | 4 $Na_2PO_3F$ | 0.0384 | 1.51 | 0.0104 | 0.41 |
| 98 NaCl | 2 $Na_2PO_3F$ | 0.0495 | 1.95 | 0.0173 | 0.68 |
| 96 NaCl | 4* | 0.0173 | 0.68 | 0.0086 | 0.34 |
| 98 NaCl | 2* | 0.0290 | 1.14 | 0.0378 | 1.49 |

*$Na_2PO_3F$ + $Na_2SiO_3$ + sodium lignosulfonate in a weight ratio of 1:1:1.

## EXAMPLE 22

The following will serve to illustrate the reduced corrosion characteristics of the preferred deicer on various metals.

| NaCl Deicer % | $Na_2PO_3F$ System % | Corrosion rate | | | | | |
|---|---|---|---|---|---|---|---|
| | | Mild Steel | | Galvanized Steel | | Aluminum | |
| | | mm/y | mpy | mm/y | mpy | mm/y | mpy |
| 100 | | 0.0599 | 2.36 | 0.0665 | 2.65 | 0.0180 | 0.71 |
| 97.6 | 0.8 lignosulfonate<br>0.8 $Na_2SiO_3$<br>0.8 $Na_2PO_3F$ | 0.0193 | 0.76 | 0.0490 | 1.93 | 0.0051 | 0.20 |
| 99%<br>99%<br>99% | 1% lignosulfonate<br>1% $Na_2SiO_3$<br>1% $Na_2PO_3F$ | 0.0472<br>0.0277<br>0.0572 | 1.86<br>1.09<br>2.25 | 0.0429<br>0.0884<br>0.0307 | 1.69<br>3.48<br>1.21 | 0.0168<br>0.0246<br>0.0051 | 0.66<br>0.97<br>0.20 |

EXAMPLE 23

The following will serve to illustrate that the reduced corrosion characteristics of deicers having $Na_2PO_3F$ and $Na_2SiO_3$ and/or lignosulfonate is due to $Na_2PO_3F$ alone or with $Na_2SiO_3$ and not to the lignosulfonate.

The inhibitor mixture of $Na_2PO_3F$ and $Na_2SiO_3$ was tested for its effect on a mild steel probe in a brine solution (the corrosion of a rebar in a small rebar-concrete probe (Example 23).

23 - CONCRETE PROBES

Rebar/concrete specimens were fabricated as in Examples 6 and 7, from 1.27 cm (1/2") rebar stock and concrete with a design 1:1:5 (Portland cement:water:sand). Concrete cover was 5 mm, and exposed rebar area ~35 cm$^2$. The probes were exposed to 3% NaCl + inhibitor (at concentration noted) solutions for the number of days listed and subsequently analyzed (corrosion rate) using the AC impedance technique.

| Probe | Inhibitor | Concentration in Aqueous Solution (w/w) | Days of Exposure | Corrosion Rate mm/y | Corrosion Rate (mpy) | Ave. mm/y | Ave. (mpy) |
|---|---|---|---|---|---|---|---|
| 1 | None | | 39 | 0.1026 | 4.04 | 0.0785 | 3.09 |
| 2 | None | | 40 | 0.0544 | 2.14 | | |
| 3 | $Na_2PO_3F$ + | 0.024 | 40 | 0.0086 | 0.34 | 0.0081 | 0.32 |
|  | $Na_2SiO_3$ | 0.024 | | | | | |
| 4 | same as 3 | same as 3 | 40 | 0.0079 | 0.31 | | |
| 5 | $Na_2PO_3F$ + | 0.024 | 41 | 0.0437 | 1.72 | 0.0301 | 1.54 |
|  | $Na_2SiO_3$ + | 0.024 | | | | | |
|  | Lignosulfonate | 0.024 | | | | | |
| 6 | same as 5 | same as 5 | 42 | 0.0348 | 1.37 | | |

## Claims

1. A method of inhibiting corrosion of rebars in reinforced concrete, which comprises laying on the surface of the reinforced concrete a corrosion inhibitor system containing at least sodium monofluorophosphate,

EP 0 322 183 B1

and wherein in contact with water the sodium monofluorophosphate inhibits the corrosion of the rebars.

2. A method according to claim 1, wherein the system is sodium monofluorophosphate.

3. A method according to claim 1 or 2, wherein the system is dissolved in an aqueous medium.

4. A method according to claim 1, wherein the system comprises sodium monofluorophosphate and sodium silicate.

5. A method according to claim 4, wherein the system comprises sodium monoflurophosphate and sodium silicate in a weight ratio of 1:10 to 1:2.5.

6. A method according to claim 5, wherein the system comprises sodium monofluorophosphate and sodium silicate in a weight ratio of about 1:1.

7. A method according to claim 1, wherein the system is sodium monofluorophosphate, cocoamide and a water-soluble salt of at least one phosphonic acid derivative having the general formula $R_n R^1 N$-$(CH_2 PO_3 H_2)_{2-n}$, wherein R and $R^1$ are independently selected from alkyl, aminoalkyl and hydroxy-alkyl, and n is 0 or 1.

8. A method according to claim 1, wherein the system is dissolved in a suitable carrier.

9. A method according to claim 1, wherein the system includes a non-aqueous carrier.

10. A method according to claim 1, wherein the system includes sand.

11. A method according to any of claims 1 to 10, wherein the surface is an outdoor reinforced concrete surface.

12. A method according to claim 11, wherein the surface is a reinforced concrete surface of a bridge.

13. A method according to any of claims 1 to 12, wherein the surface is sprayed with the system.

14. A method according to any of claims 1 to 13, wherein the system also contains a deicer.

15. A method according to claim 14, wherein the deicer is a corrosive deicer which comprises at least one member selected from sodium chloride, calcium chloride, magnesium chloride and potassium chloride.

16. A method according to claim 14 or 15, wherein the corrosive deicer is sodium chloride.

17. A method according to any of claims 14 to 16, wherein the corrosive deicer is mixed with the sodium monofluorophosphate and laid over the concrete surface, the mixing and laying being conducted at substantially the same time.

18. A method according to any of claims 14 to 16, wherein the sodium monofluorophosphate is mixed with the corrosive deicer before being laid over the concrete surface.

19. A method according to any of claims 14 to 17, wherein the system is laid as an aqueous solution in concentrate form.

**Patentansprüche**

1. Verfahren zur Hemmung der Korrosion im Betonrippenstahl von Stahlbeton, umfassend das Aufbringen eines Korrosionshemmsystems auf die Oberfläche des Stahlbetons, wobei das Korrosionshemmsystem wenigstens Natriummonofluorphosphat enthält und wobei das Natriummonofluorphosphat bei Kontakt mit Wasser die Korrosion des Betonrippenstahls hemmt.

2. Verfahren nach Anspruch 1, wobei das System aus Natriummonofluorphosphat besteht.

13

3. Verfahren nach Anspruch 1 oder 2, wobei das System in einem wäßrigen Medium aufgelöst wird.

4. Verfahren nach Anspruch 1, wobei das System Natriummonofluorphosphat und Natriumsilikat enthält.

5. Verfahren nach Anspruch 4, wobei das System Natriummonofluorphosphat und Natriumsilikat in einem Gewichtsverhältnis von 1:10 bis 1:2,5 enthält.

6. Verfahren nach Anspruch 5, wobei das System Natriummonofluorphosphat und Natriumsilikat in einem Gewichtsverhältnis von 1:1 enthält.

7. Verfahren nach Anspruch 1, wobei das System Natriummonofluorphosphat, Kokosamid und ein wasserlösliches Salz von wenigstens einem Phosphonsäurederivat der allgemeinen Formel $R_nR^1N-(CH_2PO_3H_2)_{2-n}$, ist, wobei R und $R^1$ unabhängig voneinander aus der Gruppe bestehend aus Alkyl, Aminoalkyl und Hydroxyalkyl ausgewählt und n gleich 0 oder 1 ist.

8. Verfahren nach Anspruch 1, wobei das System in einem geeigneten Träger aufgelöst wird.

9. Verfahren nach Anspruch 1, wobei das System einen nicht wäßrigen Träger enthält.

10. Verfahren nach Anspruch 1, wobei das System Sand enthält.

11. Verfahren nach einem der Ansprüche 1 bis 10, wobei die Oberfläche eine im Freien befindliche Stahlbetonfläche ist.

12. Verfahren nach Anspruch 11, wobei die Oberfläche eine Stahlbetonfläche einer Brücke ist.

13. Verfahren nach einem der Ansprüche 1 bis 12, wobei die Oberfläche mit dem System besprüht wird.

14. Verfahren nach einem der Ansprüche 1 bis 13, wobei das System auch ein Enteisungsmittel enthält.

15. Verfahren nach Anspruch 14, wobei das Enteisungsmittel ein korrodierendes Enteisungsmittel ist, das wenigstens ein Element enthält, das aus der Gruppe bestehend aus Natriumchlorid, Kalziumchlorid, Magnesiumchlorid und Kaliumchlorid ausgewählt wurde.

16. Verfahren nach Anspruch 14 oder 15, wobei das korrodierende Enteisungsmittel Natriumchlorid ist.

17. Verfahren nach einem der Ansprüche 14 bis 16, wobei das korrodierende Enteisungsmittel mit dem Natriummonofluorphosphat gemischt und auf die Betonfläche aufgebracht wird, wobei das Mischen und Aufbringen im wesentlichen gleichzeitig erfolgt.

18. Verfahren nach einem der Ansprüche 14 bis 16, wobei das Natriummonofluorphosphat mit dem korrodierenden Enteisungsmittel gemischt wird, bevor es auf die Betonfläche aufgebracht wird.

19. Verfahren nach einem der Ansprüche 14 bis 17, wobei das System als wäßrige Lösung in Konzentratform aufgebracht wird.

**Revendications**

1. Méthode d'inhibition à la corrosion de barres nervurées dans du béton armé, qui comprend la pose sur la surface du béton armé d'un système d'inhibition à la corrosion contenant au moins du monofluorophosphate de sodium, et où mis en contact avec de l'eau le monofluorophosphate de sodium inhibe la corrosion de barres nervurées.

2. Méthode selon la revendication 1, dans laquelle le système est du monofluorophosphate de sodium.

3. Méthode selon la revendication 1 ou 2, dans laquelle le système est dissout dans un milieu à teneur aqueuse.

**4.** Méthode selon la revendication 1, dans laquelle le système comprend du monofluorophosphate de sodium et du silicate de sodium.

**5.** Méthode selon la revendication 4, dans laquelle le système comprend du monofluorophosphate de sodium et du silicate de sodium dans un rapport en poids de 1:10 à 1:2,5.

**6.** Méthode selon la revendication 5, dans laquelle le système comprend du monofluorophosphate de sodium et du silicate de sodium dans un rapport en poids d'environ 1:1.

**7.** Méthode selon la revendication 1, dans laquelle le système est du monofluorophosphate de sodium, du cocoamide et du sel soluble dans l'eau d'au moins un dérivé d'acide phosphonique ayant une formule générale $R_n$ $R^1N(CH_2PO_3H_2)_{2-n}$, dans laquelle R et $R^1$ sont indépendamment sélectionnés parmi l'alcoyle, l'aminoalcoyle et l'hydroxy-alcoyles, et n est 0 ou 1.

**8.** Méthode selon la revendication 1, dans laquelle le système est dissout dans un porteur approprié.

**9.** Méthode selon la revendication 1, dans laquelle le système comprend un porteur à teneur non aqueuse.

**10.** Méthode selon la revendication 1, dans laquelle le système comporte du sable.

**11.** Méthode selon l'une quelconque des revendications 1 à 10, dans laquelle la surface est une surface de béton armée extérieure.

**12.** Méthode selon la revendication 11, dans laquelle la surface est une surface de béton armé d'un pont.

**13.** Méthode selon l'une quelconque des revendications 1 à 12, dans laquelle la surface est arrosée avec le système.

**14.** Méthode selon l'une quelconque des revendications 1 à 13, dans laquelle le système contient également un dégivreur.

**15.** Méthode selon la revendication 14, dans laquelle le dégivreur est un dégivreur corrosif qui comporte au moins un élément sélectionné du chlorure de sodium, du chlorure de calcium, du chlorure de magnésium et du chlorure de potassium.

**16.** Méthode selon la revendication 14 ou 15, dans laquelle le dégivreur corrosif est du chlorure de sodium.

**17.** Méthode selon l'une quelconque des revendications 14 à 16, dans laquelle le dégivreur corrosif est mélangé avec du monofluorophosphate de sodium et posé sur la surface de béton, le mélange et la pose devant être effectués substantiellement en même temps.

**18.** Méthode selon l'une quelconque des revendications 14 à 16, dans laquelle le monofluorophosphate de sodium est mélangé au dégivreur corrosif avant d'être posé sur la surface de béton.

**19.** Méthode selon l'une quelconque des revendications 14 à 17, dans laquelle le système est posé comme une solution aqueuse de forme concentrée.